# EUROPEAN PATENT SPECIFICATION

(11) **EP 2 252 051 B1**
(45) Date of publication and mention of the grant of the patent: **11.06.2014**
(21) Application number: 09006494.0
(22) Date of filing: 13.05.2009
(51) Int. Cl.: H04N 7/16

(54) **A method of content retrieval**
Verfahren zum Abrufen von Inhalten
Procédé de récupération de contenu

(43) Date of publication of application: 17.11.2010
(73) Proprietor: Sony Europe Limited, Brooklands Weybridge KT13 0XW (GB)
(72) Inventor: Hnyk, Ruediger, 86316 Friedberg (DE); Heider, Frank Fritz, 82210 Germering (DE); Raesig, Tassilo Volker, 84028 Landshut (DE); Rodrigues, Jose Alexandre Simoes, 84028 Landshut (DE)
(74) Representative: Müller - Hoffmann & Partner

(56) References cited:
- EP-A- 2 015 577
- WO-A-02/11440
- WO-A-2007/063468
- US-A1- 2007 204 314
- US-A1- 2007 288 963
- US-A1- 2008 148 179
- US-B1- 6 973 663

## Description

An embodiment of the invention relates to a method of content retrieval. Further embodiments of the invention relate to a server, a television apparatus and a system adapted for content retrieval.

### BACKGROUND

Nowadays, a large amount of information sources providing video data are accessible for receivers such as television apparatuses. This is on the one hand due to the efficient transmission of video data via e.g. via digital broadcasting. On the other hand, further information sources providing video data are accessible via other networks, such as the internet. For example, in Germany more than 1000 channels of broadcast and internet TV are available. Due to the enormous amount of information sources available, linear channel zapping or channel hopping through channels of content broadcast in a linear, scheduled fashion is now burdensome for the user and unlikely to be the quickest method for the user to find a content item of interest.

In US 2008/148179 A1, a method in a computer system for displaying a plurality of media items as selectable media tiles on a display device is disclosed. In the method, a focus media item and a plurality of related media items are received. The plurality of related media items are related to the focus media item. Relatedness information pertaining to the plurality of related media items is received. A spatially oriented relatedness arrangement of selectable media tiles is displayed on the display device. The selectable media tiles represent the focus media item and at least one of a plurality of related media items.

In EP-A-2 015 577, an image display apparatus and an information providing method using the image display apparatus are disclosed. The image display apparatus, e.g. a digital TV, classifies RSS information provided from a web server according to a time slot, and displays the RSS information in predetermined categories at corresponding time slots on a screen, in order to provide user with the RSS information.

In US 2007/204314 A1, a method and apparatus for selecting digital access technology for programming and data delivery over a content-based network is disclosed. In one embodiment, the network comprises a HFC cable or satellite network including client devices, each having different capability profiles. The server determines the one or more capabilities possessed by the clients and evaluates one or more program or content choices for possible delivery to that client based on its profile. The server generates a list of programs or content based on this evaluation and transmits the list to the client, which displays the list for viewing by a user. The user is thereby offered a list of available content that is comparable with his specific configuration.

It is therefore an object of the invention to provide a method of content retrieval allowing a user of a television apparatus to get a quick and easy to use overview on the programs of interest available, thereby enhancing the user's television experience.

This object is solved by a method, a server, a television apparatus and a system according to the independent claims.

Further details of the invention will become apparent from a consideration of the drawings and the ensuing description.

### BRIEF DESCRIPTION OF THE SEVERAL VIEWS OF THE DRAWINGS

The accompanying drawings are included to provide a further understanding of the embodiments and are incorporated in and constitute a part of this specification. The drawings illustrate embodiments and together with the description serve to explain principles of the embodiments. Other embodiments and many of the intended advantages of embodiments will be readily appreciated as they become better understood by reference of the following description. The elements of the drawings are not necessarily to scale relative to each other. Like reference numerals designate corresponding similar parts.
- Fig. 1: illustrates an embodiment of a method of content retrieval based on an iterative selection of a content item for consum- ing.
- Fig. 2: illustrates a further embodiment of a method of content re- trieval based on a recursive determination of a content item for consuming.
- Fig. 3: illustrates an embodiment of the recursive process of deter- mining a content item for consuming.
- Fig. 4: illustrates determination of a subset of content items related to a given content item in a further embodiment of a method of content retrieval.
- Fig. 5a: illustrates a further embodiment of the method of content retrieval with respect to a user's selection.
- Fig. 5b: illustrates a further step according to the embodiment of Fig. 5a.
- Fig. 5c: illustrates a further step according to the embodiment of Figs. 5a and 5b.
- Fig. 6: illustrates an embodiment of a system of content retrieval.
- Fig. 7: illustrates a further embodiment of a system of content re- trieval.
- Fig. 8: illustrates a further embodiment of a system of content re- trieval.
- Fig. 9: illustrates a step of selecting and filtering content items and subset information in an embodiment of a method of content retrieval.

### DETAILLED DESCRIPTION

In the following, embodiments of the invention are described. It is important to note that all described embodiments may be combined in a way, i.e. that there is no limitation that certain described embodiments may not be combined with others. Further, it should be noted that the same reference signs throughout the Figures and within the description denote same or similar elements.

It is further to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

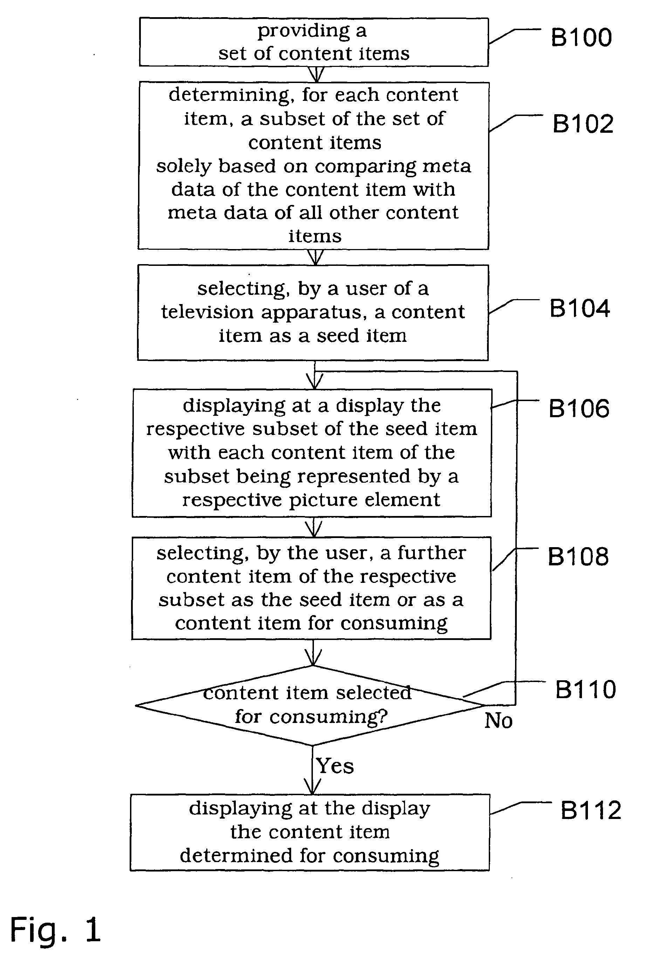

In Fig. 1, an embodiment of a method of content retrieval is illustrated.

In the following, the term "consuming" or "consumption" when applied to content items is intended to be understood as being derived from the term "consumer". Just as a consumer would look to buy, make use of or otherwise acquire goods or services, a consumer can be said to consume content items. Content items need not be bought in exchange for monies by consumers; they may be delivered for example by free to air delivery. Consuming of a content item may for example include, watching, listening, displaying, editing, manipulating, copying, moving, previewing, navigating through, selecting, recording, reproducing or more generally initiating an activity in respect of a content item.

At B100, a set of content items may be provided. The content items may include multimedia data items for user consumption. Further, each of the content items may include meta data related to the multimedia data, the meta data describing characteristics of the multimedia data, e.g. of its content. Such meta data may, for example, be suited for use in an electronic program guide (EPG) system, including a description of the content of the multimedia data items, of participating persons such as actors or moderators, and further content-related information. Further, the meta data may include information on an availability of the multimedia item, e.g. may be indicating a time and channel of its broadcast, e.g. including triplet and timing information, or an URI for its download. Triplet information, as used in digital television broadcasting, includes three parts: a first part, also referred to as original network ID (OID), a second part, also referred to as transport stream ID (TSID), and a third part, also referred to as service ID (SID). In the case of DVB, the triplet may be written as DVB://OID.TSID.SID. The meta data may be in accordance with the MPEG-7 and/or TV-Anytime standards.

For example, the content items may include program events of television channels of broadcast and/or internet television. For example, the content items may include program events scheduled to be broadcast within a predetermined period of time in the future.

Further the content items may also include multimedia data items accessible at any time. For example, the content items may include video data accessible on demand by a user, e.g. in a "video on demand" system. In addition, the content items may include program events that have been broadcast in the past and that have been stored by "catch up" servers, e.g. on the internet, allowing to download the program event as "catch up television". The content items may be restricted to multimedia data items stored within a predetermined period of the past, e.g. not earlier than a predetermined threshold time.

The content items may also include further multimedia data, such as images, audio/video data (in files or streams), textual data and/or executable applications, such as video games or widgets/gadgets/applets, i.e. small applications to be run within a predefined environment, enabling user interaction and data access e.g. via a network. For example, if a seed item is a documentary film about Paris, then there a weather widget may be included in the subset automatically loading information about the weather in Paris.

Additionally, non-video content items may be included in the content items, such as still images, textual data or non video executable applications.

Program events included in the content items may belong to television channels, such as BBC1, ZDF, TF1, Fox News or the like. The television channels may be transmitted by a digital television signal, e.g. according to a DVB, ATSC, ISDB or DMB standard. Accordingly, transmission of the broadcast signal may be realized by terrestrial transition (DVB-T, DVB-T2, DVB-H, DVB-SH, ATSC, ATSC-M/H, ISDB-T or T-DMB), by cable transmission (DVB-C, ATSC, ISDB-C), by microwave transmission (DVB-MT, DVB-MC or DVB-MS), satellite transmission (DVB-S, DVB-S2, DVB-SH, DVB-SMATV, ISDB-F or S-DMB) and/or by internet transmission (DVB-IPTV). If transmitted in accordance with the DVB standard, the television channels may correspond to services.

Further networks, such as the internet, may also allow access to content items of the set, as described in the above. These various and further information sources may be taken into account when providing the set of content items at B100, such that all these information sources may be taken into account when providing the set of content items.

At B102, for each content item of the set, a subset of the set may be determined. The determination of the subset may only be based on comparing the meta data of the content item with the meta data of all other content items. In other words, the subset for a certain content item may be determined solely by comparing the meta data of the certain content item with the meta data of all other content items of the set.

When comparing the meta data of the certain content item to meta data of all other content items of the set, any kind of data comparison and any kind of comparing algorithm may be applied. For example, a textual comparison based on various fields of the meta data may be performed. A quality of match between the meta data of the certain content item and the meta data of another content item may be determined or quantified. Further, also exact matches of words within the meta data of the certain content item and the meta data of another content item may be taken into consideration.

Further, images (still images or video clips) associated with the content item as metadata may be used for the iterative or recursive searching. This may be for example searching for images with similar colour properties. More generally, feature vector techniques may be used in which the metadata (images or textual metadata) is represented by feature vectors and Euclidean distances can be calculated between feature vectors for content items to identify closely linked or related content items.

Based on the results of comparison, all content items which are judged to be best matching the certain content item may be included in the subset of the certain content item. For example, all content items with a quality of match higher than a given threshold may be included. Alternatively, a predetermined number of content items best matching the certain content item may be included. Further alternatively or additionally, content items with their meta data exactly matching the meta data of the certain content item may be included.

Thus, for each content item, a subset of the set of content items may be identified at B102, which subset includes all content items with meta data matching the meta data of the certain content item.

At B104, one of the content items of the set of content items may be selected as a seed item by a user of a television apparatus. For example, the seed item may correspond to a content item that the user currently consumes, e.g. is watching on his or her television apparatus. Alternatively, the seed item may correspond to a content item the user has been watching in the past. Further alternatively, the seed item may also be automatically generated, e.g. based on the user profile reflecting the preferences of the user, or based on a mood of the user that may be determined based on keywords uttered by a user and detected by a speech detection apparatus. Further, the seed item may also be determined based on a user feedback of the user, rating content of content items in accordance with a user's personal taste, the feedback having been entered during watching or navigation activities of the user e.g. by use of a remote control of the television apparatus. As a further alternative, the seed item may also be entered directly, e.g. by a text or speech of the user. A text input may for example be entered via an onscreen keyboard operated by the remote control.

Based on the seed item, an iterative process for determining a content item for consuming according to a user's wish may be executed. The iterative process is based on a repetition of steps of the process, wherein the steps are repeated e.g. until a predetermined condition holds. In this case, the condition corresponds to the selection of the content item for consuming by the user. In other words, the iterative process allows the user to select, within the set of content items, a content item he or she desires to consume, i.e. a content item of particular interest for him or her. For example, the content item for consuming may be a program event the user desires to view, a textual information the user desires to read, or an interactive application, e.g. video game, the user desires to run.

It should be noted that a program event for a content item that has occurred in the past as a scheduled broadcast can be used as a seed item to find related content items, irrespective of whether or not that content item is available on demand over the internet or indeed as a later scheduled repeat.

In some embodiments, it is proposed, for the user's convenience, to provide an electronic program guide in which available content items are displayed as representative images and include currently broadcast program events which the user can select to initiate a channel change, past schedule events which the user can select to initiate on demand retrieval and playback and future scheduled broadcasts which a user can select for later recording, all of which types are displayed concurrently on screen and being related to seed item(s) chosen by a user. Additional metadata for one or more content items may also be displayed concurrently.

At B106, within the iterative process, a respective subset of the seed item selected by the user may be presented to the user, e.g. may be displayed at a display of the television apparatus of the user. The content items of the subset or at least a part of the content items of the subset may be represented as images, e.g. key frames or representative keystamps or thumbnails representing content items. The images may be still or moving images. This allows providing a graphical representation of the subset related to the seed item. The graphical representation may form a graphical user interface which.

If the subset includes program events, video data or image data, the images may correspond to thumbnails representing the respective content item. Alternatively, the images may correspond to a logo representing the program event, its genre (e.g. horror thriller, tennis, UEFA Cup) and/or the transmitting television channel (BBC 1).

The graphical representation of the subset thereby may be part of a graphical user interface allowing the user to get a quick overview on the content of the subset and to easily navigate through the subset, e.g. for exploring the content of the subset or for selecting, as illustrated at B108, a further content item as the seed item for the next step of iteration or as the content item for consuming.

As illustrated at B110, the iterative process of selecting the seed item and displaying the respective subset may be repeated until a content item is selected for consuming.

When a content item for consuming has been selected by the user, the content item is displayed to the user at the display, as illustrated at B 112.

The iterative process of selecting a seed item and displaying the respective subset of the seed item, allowing a further selection of a seed item, allows a quick and efficient navigation from the first seed item to further content items which may be of interest for the user. Even though a large number of content items of various information sources may be included in the set of content items, the process allows navigating step by step through content items of interest, until a content item desired for consuming is identified. Thereby, a quick and easy to use navigation through an enormous amount of television channels, program events, video on demand items and non-video items can be achieved, e.g. in an electronic program guide including broadcast channels, internet TV and further information sources in a unified approach.

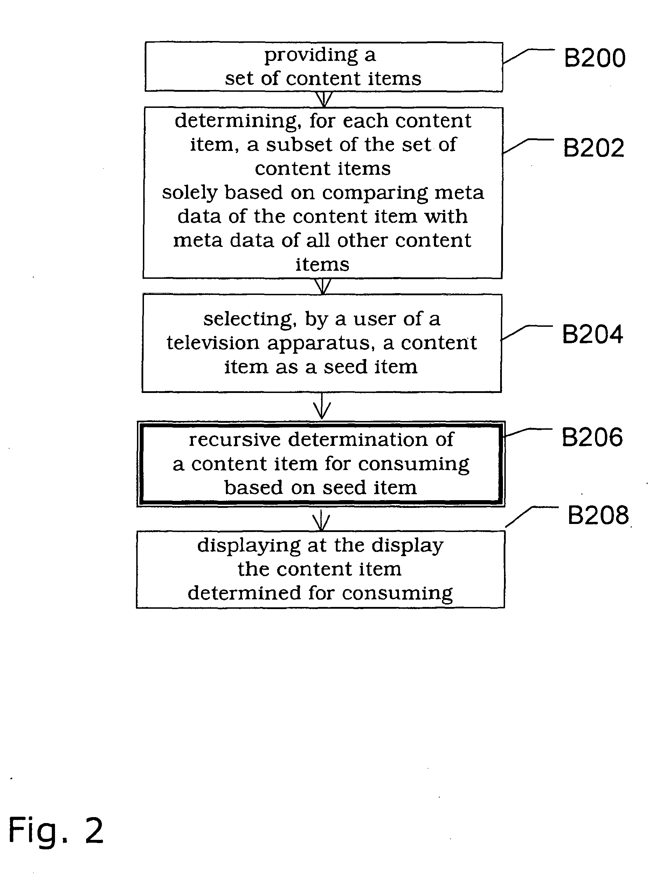

In Fig. 2, a further embodiment of a method of content retrieval is depicted. Steps B200 to B204 and B208 mutually correspond to steps B100 to B104 and B112. such that a further explanation of these steps is omitted.

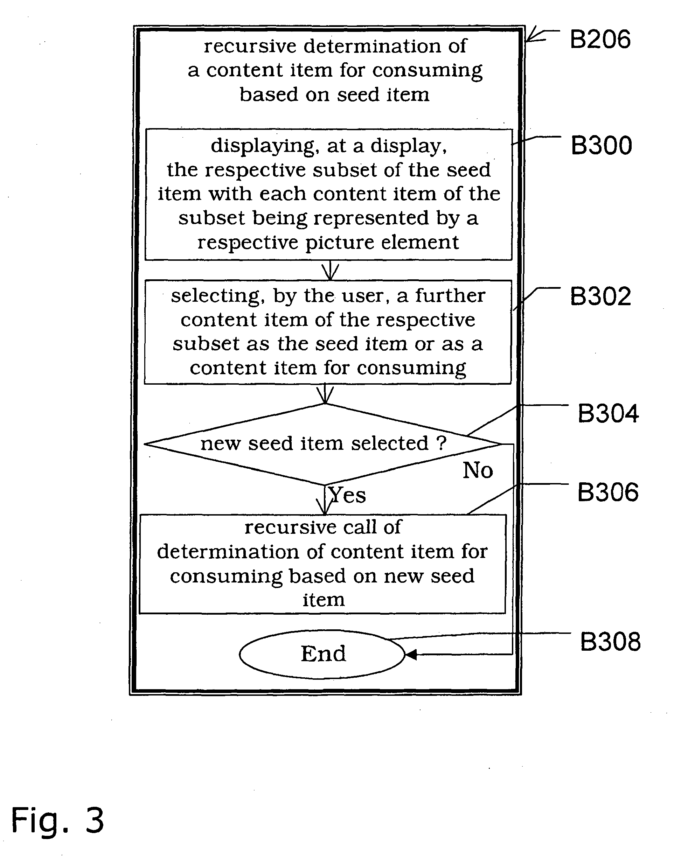

At B206, the content item for consuming to be selected by the user of the television apparatus is determined recursively, i.e. by a recursive process, based on the seed item selected by the user, and performed until one of the content items of the set is determined as the content item for consuming. The recursive process may be defined by steps, the steps being applied within their own definition. When executing the recursive process, the steps are therefore carried out in a self-similar way, as will be explained in more detail in Fig. 3.

In Fig. 3, the recursive process of B206 of Fig. 2, i.e. the recursive determination of the content item desired for consuming by the user, is further illustrated. At B300, the respective subset of the seed item selected by the user is displayed at the display, as already explained for B106. At B302, the user may select a further content item of the respective subset as a further seed item for a further recursive call of the process B202, or alternatively as the content item for consuming. If a new seed item has been selected, a further recursive call of the recursive process, based on the new seed item, is issued at B306. Otherwise, the recursive process terminates at B308. After termination, the content item selected for consuming is displayed to the user as shown at B208 of Fig. 2.

As the iterative determination of the content item for consuming within the set of content items, the recursive determination also allows to quickly navigate from the first seed item to content items that may be of interest for the user until a content item for consumption is determined. This allows a smart navigation through the large amount of content items from various information sources according to the interests of the user.

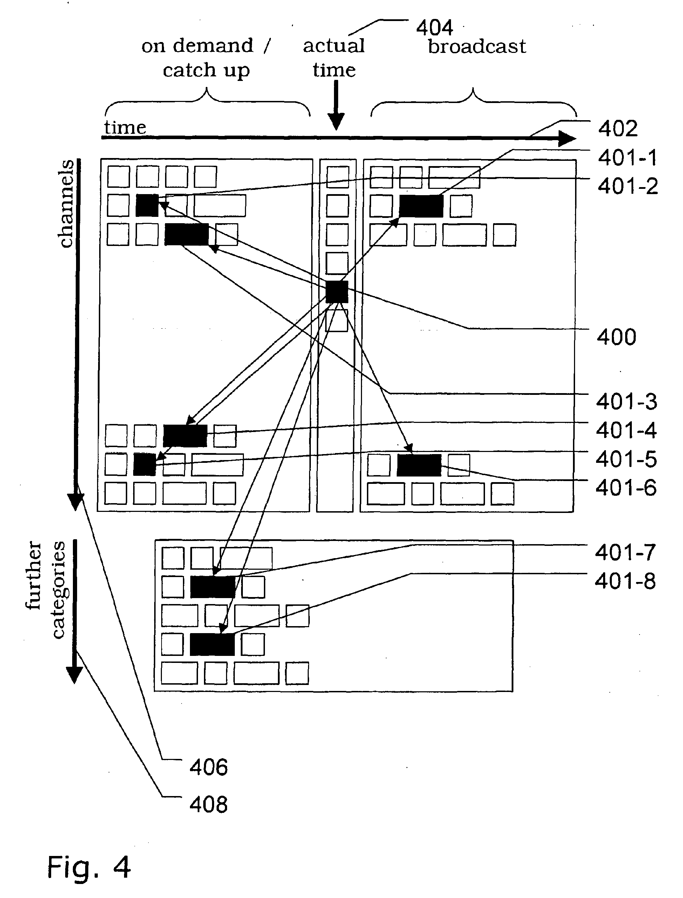

In Fig. 4, the determination of a respective subset of content items of a content item 400 in a further embodiment is illustrated. For giving an overview, the set of content items is grouped in accordance with the types and/or information sources of the content items included in the set.

Time axis 402 illustrates a period of time which may be fixed for determining and/or selecting the content items of the set from a large amount of content items available. Departing from an actual time, indicated by actual time arrow 404, the period of time may extend several days, weeks or months to the past and several days, weeks or months to the future. The extension of the period of time may depend upon a temporal scope within the embodiment. Several days up to one month in advance may be a typical scope of, for example, an electronic program guide in order to cover all broadcast events scheduled for this period of time. Further, the period of time may extend between two to four weeks to the past for including all video on demand or catch up events stored for this period. Such video on demand or catch up events may be provided for download on a video streaming server of a content provider, such as a broadcaster like BBC. This can be a free service or subject to charges of the user. The system may further offer more or less content than available on the internet, e.g. due to special agreements with the content provider. The temporal scope may be set in accordance with a user's wish or in accordance with a device setting such as a storage capacity of the user's television apparatus.

As indicated with the channels arrow 406, the content items may be related to different television channels, e.g. including broadcast channels and other channels, such as internet television. Due to the various information sources and broadcasts, the number of channels may be large (for example, in Germany, about 100 broadcast channels, 700 online information sources and 150 sources of catch-up television are available, such that about 1000 channels may be included in the set of content items).

In addition, further content items from further categories may be included in the set of content items, as indicated with further categories arrow 408. These categories may include promotional services, information providers, e.g. providing latest news or stock exchange data, or articles repurposed from print media and made available over the internet.

In the case depicted, the user watches a program event represented by content item 400, to which he desires to gather more information. Content item 400 is therefore considered as being the seed item, e.g. for performing one of the processes depicted in Figs. 1 or 2.

For performing the respective processes, the respective subset of seed item, content item 400, is to be identified, e.g. based on comparing the meta data of content item 400 to the meta data of all other content items of the set, as explained in the above for B102 or B202 of Figs. 1 or 2. In the case depicted, the content items 401-1, ..., 401-8 of the subset of program event 400 are marked in black and are linked to content item 400 by arrows. The arrows may represent linking information, linking content item 400 to the items included in its respective subset.

In the embodiment, actual and future broadcasted content items may be displayed in a single overview, each item depicted by an image with explanation text, as outlined in Fig. 4. In case past items are selected for consuming, the Internet stored content is retrieved; for actual content, the respective broadcast channel is tuned and for future items a reservation for a video recording is done.

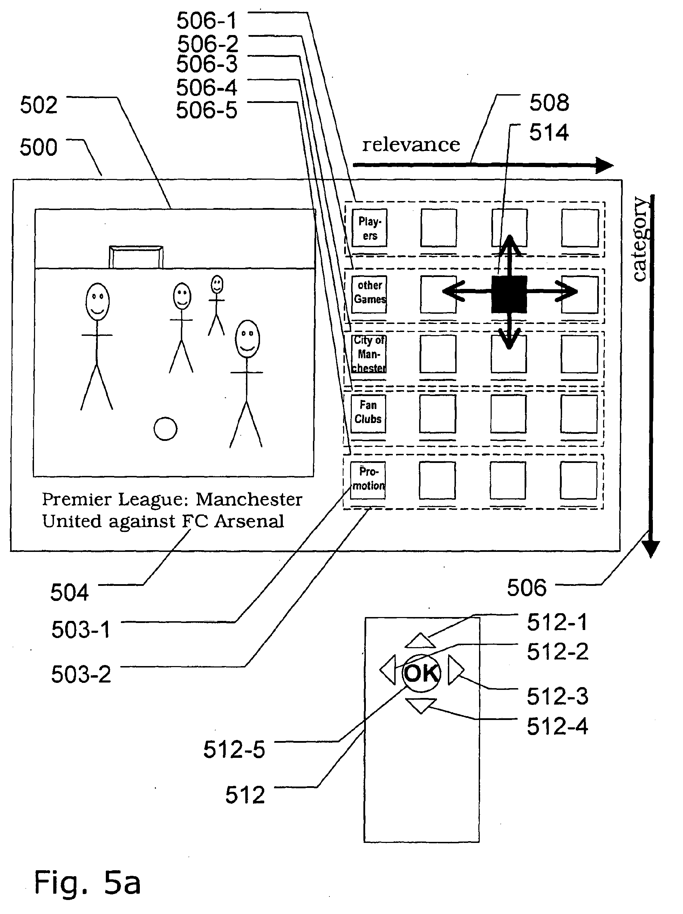

In Fig. 5a, it may be assumed that the user has been watching a football game, such as Manchester United against Arsenal FC. This football game may therefore correspond to content item 400 of Fig. 4. When initiating the method of content retrieval, e.g. by calling an electronic program guide upon a button click of the remote control, the display 500 may be re-organized as follows. In a viewing window 502, content item 400 may be continued to be displayed. Further, additional information, e.g. from the meta data of the content item displayed in viewing window 502, may be displayed in a meta data section 504.

The subset of content items related to the content item displayed at the viewing window 502 may be displayed in a further section of the graphical user interface, occupying the right half of display 500. In this section, the content items of the subset may be displayed by images and may be arranged such that the user gets a quick overview on the items display. For each content item of the subset, an image 503-1 and a textural representation 503-2, e.g. taken from its meta data, may be presented.

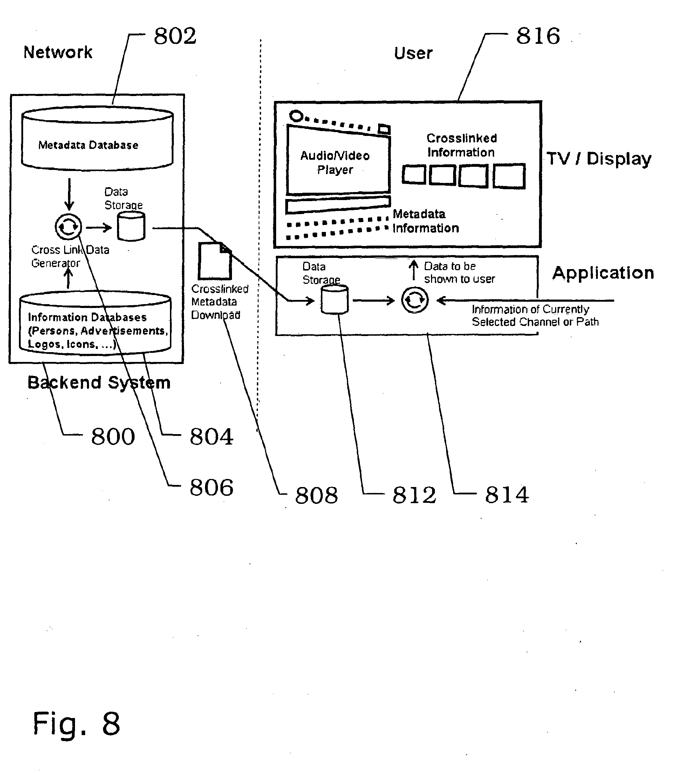

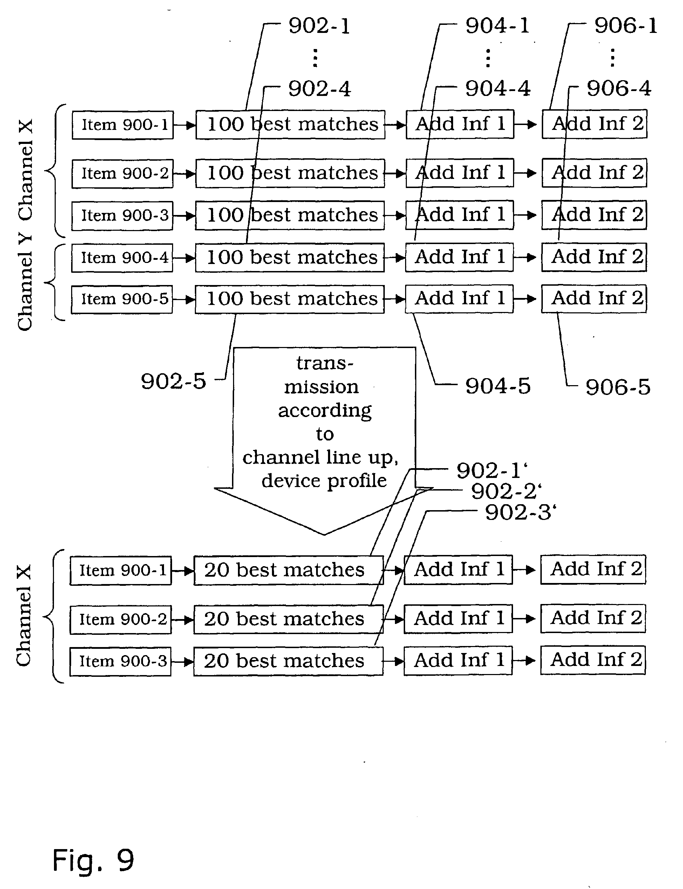

The subset of content items related to the content item displayed at the viewing window 502 may be grouped by categories, as illustrated by a category arrow 506. For example, the content items may be arranged in rows according to categories 506-1, 506-2, 506-3. 506-4 and 506-5. The category of a certain content item may be determined by analyzing the meta data associated with the certain content item, e.g. may correspond to keywords in the meta data of the certain content item. As will be discussed below with Figs. 8 and 9, these keywords may be identified within the meta data by comparing the meta data with predetermined data, e.g. including information of public contemporary interest. For example, the data including information of public, e.g. contemporary, interest may be provided within a database, such as the information databases illustrated in Fig. 8 and discussed below.

The categories may be displayed in a manner structuring the graphical user interface. For example, they may be displayed e.g. in a first column of rows arranging the subset of content items, as illustrated in Fig. 5a. The categories may be identified or indicated by a textual or graphical representation. In case that a keyword identified with referral to the database are used as categories, an icon or image from the database associated with the keyword may be used as the representation.

For the seed item of a "Manchester United" football match, as depicted on Fig. 5a, there may be a category 506-1 of content items related to Manchester United players like Wayne Rooney, a second category 506-2 of other Manchester United content, such as further Manchester United games, a third category 506-3 related to Manchester, the town, a forth category 506-4 related to Fan Clubs of Manchester United, and a fifth category 506-5 promoting fan articles available for shopping.

Further, the content items may be ordered depending on their relevance, as illustrated by a relevance arrow 508. For this ordering, the quality of match and/or the user profile descriptive of the user's personal tastes may be taken into consideration.

In the case depicted, it may be supposed that the meta data of the seed item displayed in viewing window 502 contains a keyword Manchester and a genre sport. Keyword Manchester may be identified as a city and as a football team. As categories within the subset, sports related content items, such as content items related to the team and to players, may be included, as well as documentary content items and travel-related content items related to the city of Manchester. Further, promotional content items offering fan articles and internet content items providing access to personal web pages of the players may be included.

Within the subset displayed, the user may navigate through the content items e.g. by use of his remote control 512, by speech, or by a further input device. When using a remote control, navigation keys 512-1 to 512-4 may be provided for marking images and skipping horizontally and vertically through the content items arranged on the, e.g. two-dimensional, display surface. Alternatively or in addition, further navigation keys may be provided for zooming in and out of a marked item, thereby providing access to a 3-dimensional arrangement or a 3-dimensional linking of the content items displayed. Further, at least one confirmation key 512-5 may be provided for selecting a marked image.

In the example, content item 514 is marked, and navigation keys 512-1 to 512-4 may be used for skipping upwards, to the left, to the right or downwards, respectively, for marking a neighboring content item of the subset. Once a content item of interest is reached within the subset, the user may operate confirmation key 512-5 for selecting the content item as a further seed item.

The navigation within the graphical user interface, displaying the subset related to the seed item graphically, allows a quick and easy to use selection of the further seed item with only very few and simple user interactions. The selection may be carried out using a remote control with very few keys or by uttering intuitive speech commands.

To allow a quick overview supporting the user's selection, the size of the respective subset of content items displayed at the display may be adapted to a display capacity of the display. For example, when using mobile devices having only a small display, only very few items may be displayed on the graphical user interface. However, when skipping vertically or horizontally, further items may be included (e.g. on a right or lower edge of display 500), while other items may be excluded or hidden. When, however, using a large display, more items may be displayed. The number of items displayed may, e.g. be determined by a user's setting, or may automatically be adapted to a human cognitive reception capacity. For example, the content items may be arranged in a table with four or five rows and four or five columns. It is expected that no matter how large the screen, displaying hundreds of content items to select from at the same time might overwhelm a user.

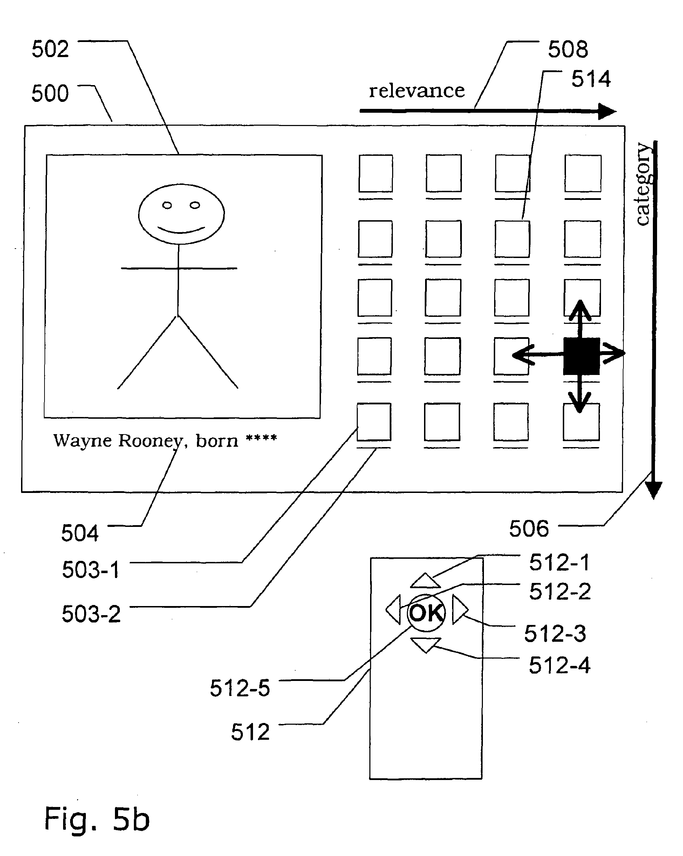

After having selected a further content item as the seed item (as described at B108 or B302 of Figs. 1 and 3), e.g. by pushing confirmation key 512-5, the graphical user interface may be updated as shown in Fig. 5b. In the case depicted, it is to be assumed that one of the players of Manchester United, Wayne Rooney, has been selected. In viewing window 502 of display 500, a picture of Wayne Rooney may be shown, and additional information may be displayed in meta data section 504. Further, a new subset of content items may be determined for the new seed item related to Wayne Rooney, and may be displayed at the graphical user interface. Within the subset, a further seed item or item for consuming may then be determined (as described at B108 or B302 of Figs. 1 and 3) by means of the remote control, using navigation keys 512-1 to 512-4 and confirmation key 512-5.

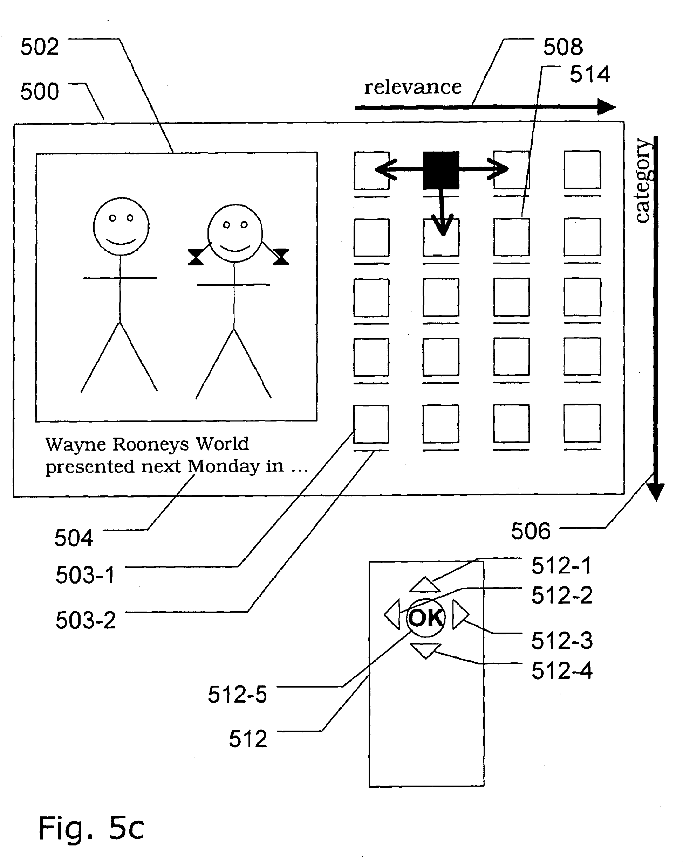

In Fig. 5c, it is to be assumed that a content item representing a program event scheduled for next Monday with title "Wayne Rooney's world", presenting the player's family, has been selected. This program event may, for example, be marked as content item for consuming and may, thereby, be scheduled for recording on a storage comprised within the television apparatus or on a storage externally connected to the television apparatus. Alternatively, the program event may also be included in a personalized television schedule.

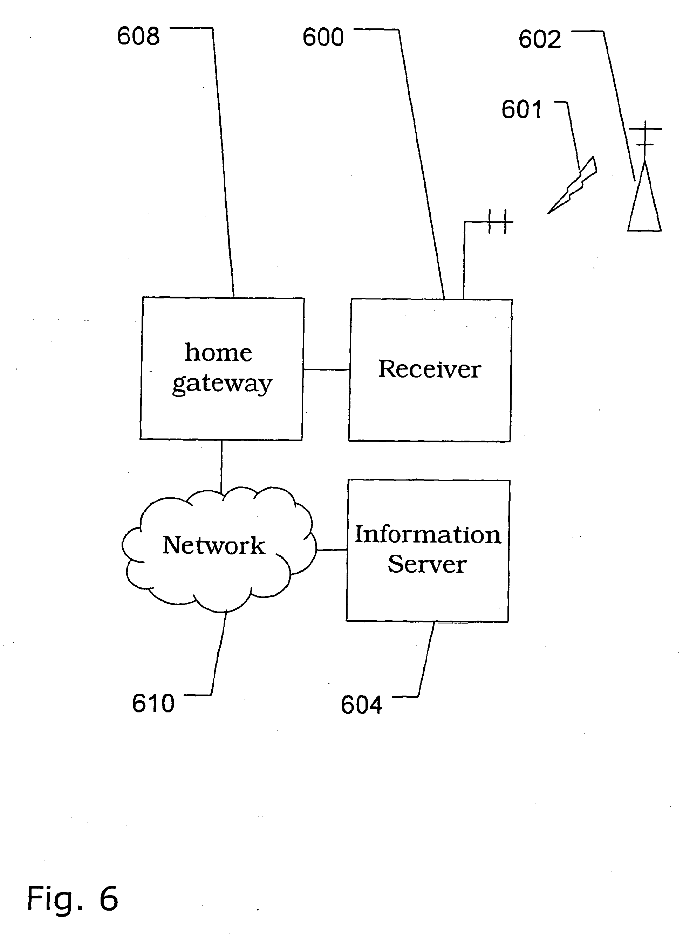

In Fig. 6, a system of content retrieval is illustrated. The system comprises a receiver 600 adapted to receive a broadcast signal 601 transmitted by a broadcast station 602. The receiver may, for example, be a television apparatus, such as a living room television or a mobile viewing device. The receiver may also be a television connected back box device, a set top box connected to a television apparatus, a living room personal computer connected to a television apparatus, a television apparatus connected to a playing console or any other device with broadcast signal access, network connections, a general purpose processor, a local memory data storage and access to display capacities. Receiver 600 may be connected through a home gateway 608 to a network 610, allowing access to an information server 604. Receiver 600 consequently has access to broadcast television channels as well as to further information sources reachable via network 610, and thereby may allow receiving a multitude of television channels and other information sources.

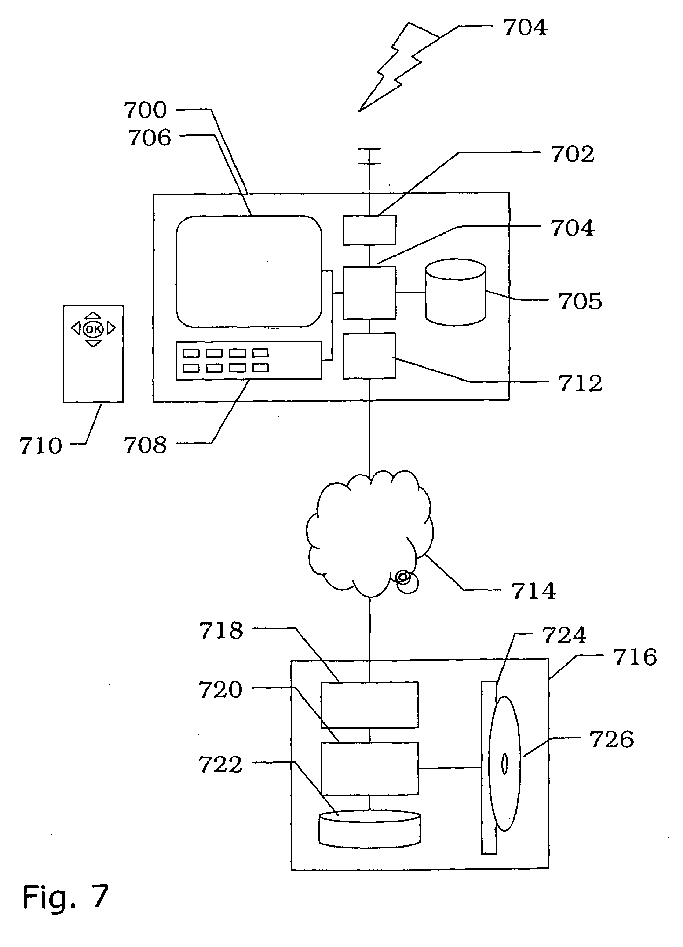

In Fig. 7, a further embodiment of a system of content retrieval is displayed. The system may include a television apparatus 700 including a tuner 702 adapted to receive a broadcast signal 704 transmitted by a broadcast station (not shown). The television apparatus 700 may further include a data processor 704 and a storage 705. Further, television apparatus 700 may include a graphical user interface including a display 706 and an input unit 708, such as a keyboard or speech input unit. Additionally, a remote control 710 may be provided.

Television apparatus 700 is further connected, by a communication unit 712, to a network 714, e.g. the internet, over which communication with a server 716 may be established.

Server 716 may include a communication unit 718, a data processor 720 and a storage 722. Further, a reading unit 724 for reading a computer readable storage medium 726 may be provided. Computer readable storage medium 726 may include program instructions adapted to cause a computer to execute any of the embodiments of the method of content retrieval described herein.

Storage 722 of server 716 may be adapted to store a set of content items, as illustrated in Fig. 4. Further, information relating each content item of the set to a respective subset of the set may be stored. Such information may, for example, be given by linking information corresponding to the arrows linking content item 400 of Fig. 4 to further content items. Further, the content items may include the meta data, as described in the above, which meta data may also be stored in storage 722. Alternatively, the content items stored in storage 722 may also be represented by links such as URIs, linking a respective content item to its respective content accessible for server 716 via network 714.

Data processor 720 may be adapted to determine, for a certain content item of the set, a respective subset of the set, as described in the above for B102 and B202 of Figs 1 or 2.

Communication unit 718 may be adapted to transmit the content items and the information linking the content items to the respective subsets over network 714 to television apparatus 700, which content items and information may then be received by Communication unit 712 of television apparatus 700 and stored in Storage 705.

For supporting the user in performing the method of content retrieval as described for B104 to B112 and for B204 to B208, the graphical user interface, including display 706, input unit 708 and remote control 710, may be adapted to allow a user to select a seed item out of the set and to select a further content item as the further seed item out of the subset related to the set. This recursive or iterative determination of the further seed item, and, in the end, of the content item for consuming, may be supported by data processor 704. Display 706 may be adapted, as shown in Figs. 5a to 5c, to display the respective subset related to the seed item represented by images. Further, display 706 may be adapted to display the content item for consumption.

In other words, in the system depicted in Fig. 7, the respective subset for each of the content items of the set may be determined at server 716. The information relating the content items to the respective subsets may then be transmitted from server 716 to television apparatus 700 via network 714. The selecting of the seed item, the execution of the recursive or iterative process and the displaying of the content item determined for consuming is performed at television apparatus 700. Thereby, the time consuming process of determination of the respective subsets of the content items may be performed at server 716, where a large amount of processing power, storage and communication bandwidth for accessing further information sources may be provided. Information on the respective subsets of the content items may efficiently be transmitted e.g. by linking information to television apparatus 700. At television apparatus 700, a quick navigation between the content items may then be supported by the linking information even though only limited processing power and storage is available at this device, certainly when compared to a typical personal computer or gaming hardware platform.

At least a part of the information relating the content items to the respective subsets may be transmitted from server 716 to television apparatus 700 at a point in time predetermined at the server or at the client. It may thereby be assured that linking and/or navigation information is determined upfront at the side of server 716 without consumption of processing power at television apparatus 700. Transmission and reception of the information may be performed in the background, such that it does not influence usage of television apparatus 700. A transmission time may be determined such that transmission may be completed within a period of low network traffic, allowing an efficient transmission e.g. to a large population of television apparatuses and/or other receiving devices.

In Fig. 8, a further embodiment of a system of content retrieval is illustrated. A backend system 800 includes a metadata database 802 as well as further information databases 804. The further information databases 804 may also be comprised within a single information data base.

Information databases 804 may include further information, e.g. non-video items, that may be of special interest for the users within the embodiment. For example, information on persons of public interest, such as politicians, celebrities, actors or football players may be included with related information, e.g. a related picture. Further, gossip articles about actors performing the program may be included. Still further, product offerings related to meta data descriptions of program events may be included, promoting for example sound tracks, books, or videos related to program events. Information on countries, regions or cities mentioned in meta data description texts or on clubs, institutions, agencies or companies may also be comprised. Additionally, logos related to such information may be included, e.g. a BMW logo related to the niche television channel of BMW TV. Still further, icons e.g. reflecting a genre of program events, such as UEFA cup, tennis or fencing, may also be included.

For example, information databases 804 may include the following informational items with related attributes:
- Persons (e.g. including the attributes: Name, Photo, Biography/Filmography),
- Advertisements (e.g. including the attributes: Company name, e.g. BMW Group, images and/or logos, e.g. BMW logo, Mini logo, Rolls Royce logo, a description, an explaining sentence, such as "BMW is a car manufacturer with headquarter in Munich", promotional articles available)
- Logos (e.g. including the attributes: related Clubname(s), image/logo, a description, an explaining sentence, such as "Bayern München is a football club from Munich, Germany").
- Icons (e.g. including the attributes: Name, Flag/Icon logo, a description, an explaining sentence, such as "The United Kingdom is part of the European countries", "London is the capital of England")

Further, backend system 800 may include a crosslink data generator 806, which is adapted to generate crosslinks between content items stored within metadata database 802 and information databases 804. The generation of crosslinks may correspond to determination of a subset of the set of content items for each content item, based on comparing the meta data of the content item with the meta data of all other content items of the set, as explained for B102 and B202.

The set of content items may include all items included in metadata database 802 and information databases 804, or may be determined as a subset of the included content items. Determination of the set based on time axis 402 and with respect to particular channels and categories may be performed as illustrated in Fig. 4. The crosslinks generated by crosslink data generator 806 may then correspond to the arrows linking each content item 400 to the content items of the respective subset marked in black at Fig. 4.

The result of the crosslink generation may be stored in a data storage 808, providing, for example, linking information identifying the respective subsets.

The process of crosslink data generation may be performed upfront e.g. periodically at regular intervals. For example, a daily pre-processing of the crosslinked data is possible.

Backend system 800 maintains knowledge about connected users which are allowed to access backend system 800. These users may be considered as subscribers, having subscribed to obtain a regular content retrieval service, e.g. regular access to EPG (electronic program guide) data. These users may get customized download files at regular intervals or on demand of the crosslinked meta data download 810.

The download files may be customized according to a user configuration, configuring, for example, time axis 402 for selecting relevant content items. Further, the download files may be customized in accordance with a user's local channel line-up. For example, users may only receive content items and respective subsets of channels available at their television apparatus via broadcast signal or via network connection. Further, the download files may be customized in accordance with a device profile of the television apparatuses, for example in accordance with a storage capacity or display capacity of the television apparatus. For example, more or less crosslinked information may be transmitted depending on the storage capacity. Further, the related content items of the subset may be transmitted to the television apparatus if enough storage is available, or may be identified by address information (URI) for later download from a request of the user, if the storage capacity is low. Further, pictures, thumbnails, logos and icons may be compressed in view of the display capacity. Additionally, further customization of the download files is possible, e.g. in accordance with a user language setting or with the user profile depending on the user's personal tastes.

Once crosslinked metadata download 810 is completed, the crosslinked metadata information may be stored in data storage 812 of the user's television apparatus and may thereby be accessible for a user-side application 814.

User-side application 814 may provide e.g. an EPG functionality allowing content retrieval in accordance with the embodiment depicted in Figures 1 to 3. As the seed item, user-side application 814 may receive information on a currently selected channel or path selected by the user. On demand of the user, e.g. by pressing an EPG button of a remote control, user-side application 814 may use the crosslinked meta data information stored in data storage 812 for identifying meta data information and crosslinked content items related to the seed item, assuming that these crosslinked content items may be of interest for the user.

This information may then be displayed at display 816 of the user device, e.g. in accordance with the representation of figures 5a to 5c. As shown on display 816, a part of the display may be reserved for displaying the seed item and the related meta data. A further part of the display may be reserved for displaying the crosslinked information.

In other words, the configuration of the system accordingly allows pre-processing crosslinked meta data information upfront at backend system 800 and loading the crosslinked metadata download 808 in accordance with a user's demand or subscription in local data storage 812 in order to quickly process it locally later. The system thereby offers to the user best matching proposals of content items related to the audio/video content the user is interested in or watching at a certain moment. Further, the graphical display may be organized with an easy to use structure for finding related content items and program events.

The network side algorithm running on server 800 may be implemented in accordance with the following pseudo code:

```
 FOR ALL "subscribed users and their stored TV channel program lineup" DO
   FOR "every program item PI in the next days" DO
    IF Metadata[PI] CONTAINS "a word match in any of the backend information databases B-DBs"
    THEN "Add crosslink to this B-DB item and add B-DB item to download if not
available on the user side already"
     ENDIF
  ENDFOR
  IF "timer expires" THEN "send cross linked Metadata Download File to all
subscribed user applications"
  /* this process happens preferably during the low network usage period */  ENDFOR
```

The user side application 814 may be implemented in accordance with the following pseudo code:

```
 FOR "every program item PI the TV user watches" DO
  FOR ALL Metadata[PI] DO
    IF Metadata[PI] has "a crosslinked information CI item" THEN
       "display Picture und description metadata of CI on the screen from local data storage"
    ENDIF
  ENFOR
   If "the user selects crosslinked item" THEN
       "display further information of CI from local data storage or from remote servers"
  /* if remote server access is required, the user interface may be slower than usually*/
  ENDIF
 ENDFOR
```

Fig. 9 illustrates the determination of the crosslinked meta data, stored at data storage 808 of Fig. 8, and further illustrates the user customized crosslinked metadata download 810. In the example depicted, for all content items 900-1 to 900-5, 100 best matches 902-1 to 902-5 of further content items, e.g. of metadata database 802, are determined and linked to content items 900-1 to 900-5, e.g. in accordance with a quality of match as described in the above. Further, based on keywords explicitly mentioned in information databases 804 shown in Fig. 8, additional content items 904-1 to 904-5 and 906-1 to 906-5, e.g. corresponding to non-video content items, are also linked with items 900-1 to 900-5.

The information databases 804 may be used as a kind of "filter" within the determination of the subset of content items. This may be explained at hand of an example: Content item 900-1 is supposed to be a tennis match between Andre Agassi and a player named Marc Smith. The meta data of content item 800-1, therefore, may include the names of Andre Agassi and Marc Smith. Marc Smith, in this case, is supposed to represent a person not publicly known, while Andre Agassi is of course a well known tennis player.

Since in information databases 804 only content items of contemporary public interest may be included, it is to be supposed that the name of Andre Agassi is included, while Marc Smith is not mentioned. Accordingly, only additional information links related to Andre Agassi, the person of public interest, will be appended to the list of additional content items 904-1, thereby restricting the number of links or linked content items.

Supposing further that the public interest in Andre Agassi as a tennis player decreases over time after his retirement, his name may be excluded from information databases 804. Therefore, only links to content items of current interest, e.g. to persons of contemporary public interest, may be represented within additional content items 904-1 to 904-5 and 906-1 to 906-5.

Supposing still further, that the public interest in Andre Agassi persists in his native country, the United States of America, it may be assumed that additional content items 904-1 to 904-5 and 906-1 to 906-5 may still refer to Andre Agassi in an information database 804 used in the United States, providing information of contemporary national interest. In other nations, however, information of contemporary interest of another nation may be excluded, thereby further restricting additional content items 904-1 to 904-5 and 906-1 to 906-5 to national interests.

In the example, content items 900-1 to 900-3 belong to a channel X, while items 900-4 and 900-5 belong to a channel Y. In the example, it is to be supposed that a user requesting crosslinked metadata download 810 only has access to channel X, but not to channel Y at his television apparatus. Further, it may be assumed that the television apparatus has restricted storage capacity, which is known at backend system 800. Therefore, only content items 900-1 to 900-3 may be transmitted to the user in accordance with his local channel line-up. Further, only the 20 best matches 902-1' to 902-3' are transmitted with crosslinked metadata download 810 in accordance with a user's device profile.

Based on the information transmitted with crosslinked metadata download 810 as shown in Fig. 9, the user may get a quick overview on content items related to a content item selected, and is able to quickly navigate to further content items that may be of interest and that are accessible at his or her television apparatus.

Thereby, content to be transmitted on broadcast channels as well as content available on demand or stored at internet servers is presented in a unified, graphical approach, allowing the user to access content items of the various information sources with very few user interactions and to get a quick overview on the content that may be of interest for him or her. Accordingly, various information sources belonging to both, broadcast networks and IP based or further networks, may appear to the user as integrated, offering a quick and easy to use access, thereby enhancing the user's television experience.

Although specific embodiments have been illustrated and described herein, it will be appreciated by those of ordinary skill in the art that a variety of alternate and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims.

## Claims

1. A method of content retrieval, comprising:
providing a set including a plurality of content items;
determining, in a step of pre-processing, for each content item in the set, a subset from the set of content items, wherein the subset for a certain content item of the set is determined by comparing only meta data associated with the certain content item with meta data respectively associated with each of all other content items of the set:
selecting, by a user of a television apparatus, a content item out of the set of content items as a seed item;
executing a recursive or iterative process until one of the content items of the set is determined by the user as a content item for consuming, the process comprising.
displaying the respective subset of the seed item at a display in connection with the television apparatus, each of the content items of the respective subset being represented by a respective image;
selecting, by the user, a further content item of the respective subset displayed as the seed item or as a content item for consuming; and
displaying, at the display, the content item determined for consuming,
wherein the respective subset for each of the content items of the set is determined, in the step of preprocessing, at a server, the method further comprising:
reducing an amount of data to be transmitted by reducing the subset of content items or information relating thereto, the reduction being based on a storage capacity of the television apparatus, and
transmitting the reduced amount of data from the server to the television apparatus via a network.
wherein the selecting of the seed item, the execution of the recursive or iterative process and the displaying of the content item determined for consuming is performed at the television apparatus.

2. The method of claim 1, wherein the set of content items comprises program events scheduled to be broadcast within a predetermined period of time and program events accessible on demand by the user.

3. The method of claim 2, wherein the set of content items further comprises non-video content items.

4. The method of any of the preceding claims, wherein the respective subset of the seed item displayed at the display is grouped by categories, the category of a certain content item being determined by analyzing the meta data associated with the certain content item.

5. The method of claim 1, wherein the information to be transmitted to the television apparatus depends on an availability of channels of a broadcast signal received at the television apparatus.

6. The method of any of the preceding claims, wherein the further content item is selected by the user by use of at least one navigation key, the navigation key allowing to mark the images displayed at the display, and of at least one confirmation key for selecting a marked image.

7. The method of any of the preceding claims, wherein a size of the respective subset of content items displayed is adapted to a display capacity of the display device and/or to human cognitive reception capacity.

8. The method of any of the preceding claims, wherein at least a part of the information is transmitted from the server to the television apparatus at a point in time predetermined at the server.

9. The method of any of the preceding claims, wherein linking information linking each of the content items to the respective subset is determined.

10. The method of any of the preceding claims, wherein the image is a thumbnail item.

11. The method of any of the preceding claims, wherein the information to be transmitted to the television apparatus depends on a device profile of the television apparatus.

12. A server, comprising
a storage adapted to store a set including a plurality of content items and information relating each content item of the set of content items to a respective subset from the set of content items, wherein the content items include meta data;
a data processor adapted to determine, for a certain content item of the set of content items, a respective subset from the set of content items, wherein the subset only depends on a result of a comparison of meta data of the certain content item with meta data of all other content items of the set, the data processor being further adapted to reduce an amount of data to be transmitted by reducing the subset of content items or information relating thereto, the reduction being based on a storage capacity of a television apparatus; and
a communication unit adapted to transmit the content items and the information to the television apparatus.

13. A system, comprising
a server according to claim 12; and
a television apparatus, comprising
a reception unit adapted to receive the set of content items and the information relating each of the content items of the set to a subset of the set;
a storage adapted to store the set and the information;
a graphical user interface adapted to allow a user to select a seed item out of the set and to select a further content item out of the subset;
a data processor adapted to recursively or iteratively determine, until a content item for consumption is selected by the user, the further content item out of the subset related to the seed item, the further content item being determined as the seed item for a next step of recursion or iteration or as the content item for consumption; and
a display unit adapted to display a respective subset related to the seed item, the content items of the respective subset being represented by images, and adapted to display the content item for consumption.

## Patentansprüche

1. Verfahren zum Abrufen von Inhalt, das Folgendes umfasst:
Bereitstellen einer Menge, die mehrere Inhaltsobjekte enthält;
Festlegen in einem Vorverarbeitungsschritt für jedes Inhaltsobjekt in der Menge einer Untermenge aus der Menge von Inhaltsobjekten, wobei die Untermenge für ein bestimmtes Inhaltsobjekt der Menge durch Vergleichen nur von Metadaten, die dem bestimmten Inhaltsobjekt zugeordnet sind, mit Metadaten, die jeweils jedem von allen anderen Inhaltsobjekten der Menge zugeordnet sind, festgelegt wird;
Auswählen eines Inhaltsobjekts aus der Menge von Inhaltsobjekten durch einen Anwender eines Fernsehgeräts als ein Keimobjekt;
Ausführen eines rekursiven oder iterativen Prozesses, bis eines der Inhaltsobjekte der Menge durch den Anwender als ein Inhaltsobjekt zum Konsumieren festgelegt ist, wobei der Prozess Folgendes umfasst:
Anzeigen der jeweiligen Untermenge des Keimobjekts an einer Anzeigevorrichtung in Verbindung mit dem Fernsehgerät, wobei jedes der Inhaltsobjekte der jeweiligen Untermenge durch ein entsprechendes Bild repräsentiert wird;
Auswählen eines weiteren Inhaltsobjekts aus der jeweils angezeigten Untermenge durch den Anwender als das Keimobjekt oder als ein Inhaltsobjekt zum Konsumieren; und
Anzeigen des zum Konsumieren bestimmten Inhaltsobjekts auf der Anzeigevorrichtung,
wobei die jeweilige Untermenge für jedes der Inhaltsobjekte der Menge in dem Vorverarbeitungsschritt in einem Server festgelegt wird und wobei das Verfahren ferner Folgendes umfasst:
Reduzieren einer Datenmenge, die gesendet werden soll, durch Reduzieren der Untermenge von Inhaltsobjekten oder von sich darauf beziehenden Informationen, wobei die Reduktion auf einer Speicherkapazität des Fernsehgeräts basiert, und
Senden der reduzierten Datenmenge über ein Netz von dem Server zu dem Fernsehgerät,
wobei das Auswählen des Keimobjekts, das Ausführen des rekursiven oder iterativen Prozesses und das Anzeigen des zum Konsumieren festgelegten Inhaltsobjekts an dem Fernsehgerät ausgeführt wird.

2. Verfahren nach Anspruch 1, wobei die Menge von Inhaltsobjekten Programmereignisse, von denen geplant ist, dass sie innerhalb einer vorbestimmten Zeitspanne gesendet werden sollen, und Programmereignisse, die auf Abruf durch den Anwender verfügbar sind, umfasst.

3. Verfahren nach Anspruch 2, wobei die Menge von Inhaltsobjekten ferner Nicht-Video-Inhaltsobjekte umfasst.

4. Verfahren nach einem der vorhergehenden Ansprüche, wobei die jeweilige Untermenge des an der Anzeigevorrichtung angezeigten Keimobjekts in Kategorien gruppiert ist, wobei die Kategorie eines bestimmten Objekts durch Analysieren der dem bestimmen Inhaltsobjekt zugeordneten Metadaten festgelegt wird.

5. Verfahren nach Anspruch 1, wobei die Informationen, die zu dem Fernsehgerät übertragen werden sollen, von einer Verfügbarkeit von Kanälen eines Sendesignals, das an dem Fernsehgerät empfangen wird, abhängen.

6. Verfahren nach einem der vorhergehenden Ansprüche, wobei das weitere Inhaltsobjekt durch den Anwender durch Verwenden wenigstens einer Navigationstaste, wobei es die Navigationstaste ermöglicht, die Bilder, die auf der Anzeigevorrichtung angezeigt werden, zu markieren, und wenigstens einer Bestätigungstaste zum Auswählen eines markierten Bildes ausgewählt wird.

7. Verfahren nach einem der vorhergehenden Ansprüche, wobei eine Größe der jeweiligen Untermenge von angezeigten Inhaltsobjekten an eine Anzeigekapazität der Anzeigevorrichtung und/oder an die menschliche kognitive Aufnahmekapazität angepasst ist.

8. Verfahren nach einem der vorhergehenden Ansprüche, wobei wenigstens ein Teil der Informationen zu einem in dem Server vorher festgelegten Zeitpunkt von dem Server zu dem Fernsehgerät übertragen wird.

9. Verfahren nach einem der vorhergehenden Ansprüche, wobei Verknüpfungsinformationen, die jedes der Inhaltsobjekte mit der entsprechenden Untermenge verknüpfen, festgelegt werden.

10. Verfahren nach einem der vorhergehenden Ansprüche, wobei das Bild ein Miniaturansichtsobjekt ist.

11. Verfahren nach einem der vorhergehenden Ansprüche, wobei die Informationen, die zu dem Fernsehgerät übertragen werden sollen, von einem Geräteprofil des Fernsehgeräts abhängen.

12. Server, der Folgendes umfasst:
einen Speicher, der ausgelegt ist, eine Menge zu speichern, die mehrere Inhaltsobjekte und Informationen, die jedes Inhaltsobjekt der Menge von Inhaltsobjekten mit einer jeweiligen Untermenge aus der Menge von Inhaltsobjekten in Beziehung setzen, enthält, wobei die Inhaltsobjekte Metadaten enthalten;
einen Datenprozessor, der ausgelegt ist, für ein bestimmtes Inhaltsobjekt der Menge von Inhaltsobjekten eine jeweilige Untermenge aus der Menge von Inhaltsobjekten festzulegen, wobei die Untermenge nur von einem Ergebnis eines Vergleichs von Metadaten des bestimmten Inhaltsobjekts mit Metadaten aller anderen Inhaltsobjekte der Menge abhängt, wobei der Datenprozessor ferner ausgelegt ist, eine Datenmenge, die übertragen werden soll, durch Reduzieren der Untermenge von Inhaltsobjekten oder Informationen, die sich darauf beziehen, zu reduzieren, wobei die Reduktion auf einer Speicherkapazität des Fernsehgeräts basiert; und
eine Kommunikationseinheit, die ausgelegt ist, die Inhaltsobjekte und die Informationen zu dem Fernsehgerät zu übertragen.

13. System, das Folgendes umfasst
einen Server nach Anspruch 12;
und
ein Fernsehgerät, das Folgendes umfasst:
eine Empfangseinheit, die ausgelegt ist, die Menge von Inhaltsobjekten und die Informationen, die jedes der Inhaltsobjekte der Menge mit einer Untermenge der Menge in Beziehung setzen, zu empfangen;
einen Speicher, der ausgelegt ist, die Menge und die Informationen zu speichern;
eine graphische Anwenderschnittstelle, die ausgelegt ist, einem Anwender zu ermöglichen, ein Keimobjekt aus der Menge auszuwählen und ein weiteres Inhaltsobjekt aus der Untermenge auszuwählen;
einen Datenprozessor, der ausgelegt ist, rekursiv oder iterativ das weitere Inhaltsobjekt aus der Untermenge, die sich auf das Keimobjekt bezieht, festzulegen, bis ein Inhaltsobjekt zum Konsumieren durch den Anwender ausgewählt ist, wobei das weitere Inhaltsobjekt als das Keimobjekt für einen nächsten Schritt der Rekursion oder Iteration oder als das Inhaltsobjekt zum Konsumieren festgelegt ist; und
eine Anzeigeeinheit, die ausgelegt ist, eine jeweilige Untermenge, die sich auf das Keimobjekt bezieht, anzuzeigen, wobei die Inhaltsobjekte der jeweiligen Untermenge durch Bilder repräsentiert werden, und die ausgelegt ist, das Inhaltsobjekt zum Konsumieren anzuzeigen.

## Revendications

1. Procédé de récupération de contenu, comprenant les étapes suivantes :
fournir un ensemble comprenant une pluralité d'éléments de contenu ;
déterminer, dans une étape de prétraitement, pour chaque élément de contenu dans l'ensemble, un sous-ensemble de l'ensemble d'éléments de contenu, où le sous-ensemble pour un certain élément de contenu de l'ensemble est déterminé en comparant uniquement les métadonnées associées au certain élément de contenu à des métadonnées associées respectivement à chacun de tous les autres éléments de contenu de l'ensemble ;
sélectionner, par un utilisateur d'un appareil de télévision, un élément de contenu parmi l'ensemble d'éléments de contenu en tant qu'élément amorce ;
exécuter un processus récursif ou itératif jusqu'à ce que l'un des éléments de contenu de l'ensemble soit déterminé par l'utilisateur comme un élément de contenu destiné à la consommation, le processus comprenant les étapes suivantes :
afficher le sous-ensemble respectif de l'élément amorce au niveau d'un écran en liaison avec l'appareil de télévision, chacun des éléments de contenu du sous-ensemble respectif étant représenté par une image respective ;
sélectionner, par l'utilisateur, un élément de contenu supplémentaire du sous-ensemble respectif affiché comme élément amorce ou comme élément de contenu destiné à la consommation ; et
afficher, à l'écran, l'élément de contenu déterminé pour la consommation,
où le sous-ensemble respectif pour chacun des éléments de contenu de l'ensemble est déterminé, dans l'étape de prétraitement, au niveau d'un serveur, le procédé comprenant en outre les étapes suivantes :
réduire une quantité de données à transmettre en réduisant le sous-ensemble d'éléments de contenu ou d'informations s'y rapportant, la réduction étant basée sur une capacité de stockage de l'appareil de télévision, et
transmettre la quantité réduite de données depuis le serveur vers l'appareil de télévision, par l'intermédiaire d'un réseau,
où la sélection de l'élément amorce, l'exécution du processus récursif ou itératif et l'affichage de l'élément de contenu déterminé pour la consommation sont effectués au niveau de l'appareil de télévision.

2. Procédé selon la revendication 1, dans lequel l'ensemble d'éléments de contenu comprend des programmes événementiels planifiés pour être diffusés dans une période de temps prédéterminée et des programmes événementiels accessibles à la demande par l'utilisateur.

3. Procédé selon la revendication 2, dans lequel l'ensemble d'éléments de contenu comprend en outre des éléments de contenu non vidéo.

4. Procédé selon l'une quelconque des revendications précédentes, dans lequel le sous-ensemble respectif de l'élément amorce affiché à l'écran est groupé par catégories, la catégorie d'un certain élément de contenu étant déterminée par l'analyse des métadonnées associées à l'élément de contenu particulier.

5. Procédé selon la revendication 1, dans lequel les informations à transmettre à l'appareil de télévision dépendent d'une disponibilité des canaux d'un signal de diffusion reçu au niveau de l'appareil de télévision.

6. Procédé selon l'une quelconque des revendications précédentes, dans lequel l'élément de contenu supplémentaire est sélectionné par l'utilisateur via l'utilisation d'au moins une touche de navigation, la touche de navigation permettant de marquer les images affichées à l'écran, et d'au moins une touche de confirmation pour sélectionner une image marquée.

7. Procédé selon l'une quelconque des revendications précédentes, dans lequel une taille du sous-ensemble respectif des éléments de contenu affichés est adaptée à une capacité d'affichage du dispositif d'affichage et/ou à une capacité de réception cognitive humaine.

8. Procédé selon l'une quelconque des revendications précédentes, dans lequel au moins une partie de l'information est transmise depuis le serveur vers l'appareil de télévision en un point dans le temps prédéterminé au niveau du serveur.

9. Procédé selon l'une quelconque des revendications précédentes, dans lequel des informations de liaison reliant chacun des éléments de contenu au sous-ensemble respectif sont déterminées.

10. Procédé selon l'une quelconque des revendications précédentes, dans lequel l'image est un élément de type miniature.

11. Procédé selon l'une quelconque des revendications précédentes, dans lequel les informations à transmettre à l'appareil de télévision dépendent d'un profil de dispositif de l'appareil de télévision.

12. Serveur, comprenant :
un stockage conçu pour stocker un ensemble comprenant une pluralité d'éléments de contenu et d'informations relatives à chaque élément de contenu de l'ensemble d'éléments de contenu vers un sous-ensemble respectif de l'ensemble d'éléments de contenu, où les éléments de contenu incluent des métadonnées ;
un processeur de données conçu pour déterminer, pour un certain élément de contenu de l'ensemble d'éléments de contenu, un sous-ensemble respectif de l'ensemble d'éléments de contenu, où le sous-ensemble dépend uniquement d'un résultat d'une comparaison de métadonnées de l'élément de contenu particulier avec les métadonnées de tous les autres éléments de contenu de l'ensemble, le processeur de données étant en outre conçu pour réduire une quantité de données à transmettre en réduisant le sous-ensemble d'éléments de contenu ou d'informations s'y rapportant, la réduction étant basée sur une capacité de stockage d'un appareil de télévision ; et
une unité de communication conçue pour transmettre les éléments de contenu et les informations à l'appareil de télévision.

13. Système comprenant :
un serveur selon la revendication 12 ;
et
un appareil de télévision comprenant :
une unité de réception conçue pour recevoir l'ensemble des éléments de contenu et les informations concernant chacun des éléments de contenu de l'ensemble dans un sous-ensemble de l'ensemble ;
un stockage conçu pour stocker l'ensemble et les informations ;
une interface utilisateur graphique conçue pour permettre à un utilisateur de sélectionner un élément amorce de l'ensemble et pour sélectionner un élément de contenu supplémentaire du sous-ensemble ;
un processeur de données conçu pour déterminer de façon récursive ou itérative, jusqu'à ce qu'un élément de contenu destiné à la consommation soit sélectionné par l'utilisateur, l'élément de contenu supplémentaire dans le sous-ensemble lié à l'élément amorce, l'élément de contenu supplémentaire étant déterminé comme élément amorce pour une étape suivante de récursivité ou d'itération ou comme l'élément de contenu destiné à la consommation ; et
une unité d'affichage conçue pour afficher un sous-ensemble respectif lié à l'élément amorce, les éléments de contenu du sous-ensemble respectif étant représentés par des images, et conçue pour afficher l'élément de contenu destiné à la consommation.
